# EUROPEAN PATENT SPECIFICATION

(11) **EP 1 763 920 B1**
(45) Date of publication and mention of the grant of the patent: **18.11.2009**
(21) Application number: 05756903.0
(22) Date of filing: 22.06.2005
(51) Int. Cl.: H02K 15/12, H02K 3/34

(54) **METHOD FOR MOUNTING ROTOR WINDINGS WITH CONSOLIDATED COILS**
VERFAHREN ZUM ANBRINGEN VON ROTORWICKLUNGEN MIT KONSOLIDIERTEN SPULEN
PROCEDE PERMETTANT DE MONTER DES ENROULEMENTS ROTORIQUES AVEC DES BOBINES CONSOLIDEES

(30) Priority: 05.07.2004 SE 0401755
(43) Date of publication of application: 21.03.2007
(73) Proprietor: Alstom Technology Ltd, 5400 Baden (CH)
(72) Inventor: ANDERSSON, Jonas, S-50740 Boras (SE); ENGVALL, Kent, Uno, S-721 73 Västeras (SE); GÖRAN, Bengt, Olle, S-721 76 Västeras (SE)
(86) International application number: PCT/EP2005/052910
(87) International publication number: WO 2006/003103

(56) References cited:
- US-A- 3 050 787
- US-A- 5 771 563
- US-A1- 2004 046 477
- PATENT ABSTRACTS OF JAPAN vol. 010, no. 376 (E-464), 13 December 1986 (1986-12-13) -& JP 61 167351 A (TOSHIBA CORP), 29 July 1986 (1986-07-29)
- PATENT ABSTRACTS OF JAPAN vol. 018, no. 378 (E-1579), 15 July 1994 (1994-07-15) & JP 06 105496 A (HITACHI LTD), 15 April 1994 (1994-04-15)

## Description

### Technical field

The present invention relates to a method for mounting electrical windings including consolidated coils in winding slots of a rotor of an electric rotating machine.

### Background

Electric rotating machines, such as generators for industrial appliances, e.g. high voltage generators and turbogenerators, etc., are well known in the art. A conventional rotor in such electrical machines, such as turborotors and bi-polar rotors used e.g. in small- and medium-sized gas and steam turbines, comprises windings in form of consolidated coils, which are mounted in radial slots around the circumference of the rotor and said slots extend axially along the longitudinal or axial direction of the rotor. Traditionally, consolidated coils are formed of straight parts that comprise of a stack of conductors having a rectangular cross-section, usually made of a highly electrically conductive copper silver alloy, with turn insulation in-between the conductor strips and consolidated to form compact coil packages by half-coil shaped elements.

When the coil packages are mounted in the winding slots of the rotor, any voids filled with air between the coil package and the slot walls constitute a significant insulation for conduction of heat from the package to the rotor. A too poor heat transfer influences the performance of the rotor and hence the entire electrical rotating machine.

Up to now, the mounting of a coil package is carried out in such way that a heat conducting, electrical insulation of a paste-like composition is first applied to the surfaces of the coil package before the thus pre-formed package is inserted in the winding slot in the rotor where the paste-like composition is cured at room temperature for the purpose of filling out the air-filled voids between the coil package and the slot walls.

However, an disadvantage of the above mentioned way of mounting the coil packages in the winding slots is that the air-filled voids are not always perfectly filled by the paste-like composition and hence, the conduction of heat from the windings to the rotor body can be seriously deteriorated.

### Summary

It is an object of the invention to provide a method that at least in part eliminates the disadvantages associated with the prior art methods for mounting electrical windings including consolidated coils in winding slots of a rotor of an electric rotating machine.

It is another object of the invention to provide a method that minimizes the risk of deteriorated heat conduction in a rotor, including consolidated coils, of an electric rotating machine.

It is a further object of the invention to provide an improved electrical insulation between winding slots in a rotor and a consolidated coil inserted in the slot.

It is yet another object is to provide a method that is cost efficient, uncomplicated to carry out and further may provide a more reliable operation of an electrical rotating machine.

Accordingly, in accordance with the present invention, there is provided a method of mounting electrical windings including consolidated coils in winding slots of a rotor of an electric rotating machine, comprising for each of the consolidated coils the sequential steps of: a) arranging a sheet of electrically insulating material on at least those sides of the consolidated coil, which, when the consolidated coil is mounted in a winding slot, will be arranged at substantially radial walls of the slot, to form a coil package; b) measuring dimensions of said winding slot and the coil package and calculating a resulting clearance; c) applying a heat curing filling compound in a calculated amount, based on said calculation, to the coil package in between the sheet of electrically insulating material and the consolidated coil; d) inserting the coil package in the winding slot; and e) curing the filling compound by heating the inserted coil package in the slot to a curing temperature. The calculated amount and the curing temperature are selected so that an optimal fitting between consolidated coil included in the inserted coil package and the substantially radial walls of the slot at operating temperature conditions of the electrical machine is obtained.

Thus, by curing a selected calculated amount of the filling compound at a selected temperature it is possible to reach an optimal fitting between consolidated coil included in the inserted coil package and the substantially radial walls of the slot at operating temperature conditions of the electrical machine, and thus, the heat conducting properties of the rotor during operation are improved. Hence, the solution according to the present invention provides a new, reliable and easy way to mount a consolidated coil in winding slots of a rotor.

Embodiments and further preferable features in accordance with the present invention will be described in more detail in the following detail description below with reference to accompanying drawings.

### Brief description of the drawings

Embodiments of the present invention are hereinafter described more in detail, with reference to the accompanying drawings, bearing in mind however that the scope of protection of the present invention is indicated by the independent appended claims and not limited to the specific illustrative embodiments, in which drawings:
- Fig. 1A is an exploded, perspective view schematically illustrating the arrangement of portions of a sheet of electrically insulating material at the sides of a half-coiled element of a consolidated coil,
- Fig. 1B is a schematic, cross-sectional view showing the arrangement of parts of a respective sheet of electrically insulating material on each side of the coil package before inserting the coil package in the winding slot of a rotor,
- Fig. 2A is a fragmentary, cross-sectional view of a rotor illustrating of a coil package inserted in a winding slot, and
- Fig. 2B is in an enlarged view of a region at the boundary between the coil package and a wall of the winding slot in Fig. 2A.

### Detailed description

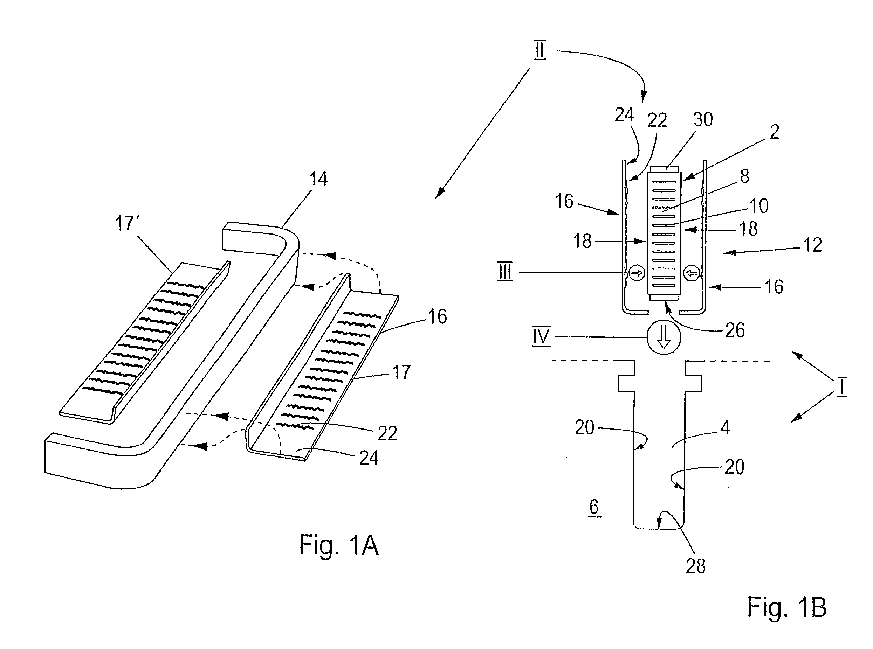

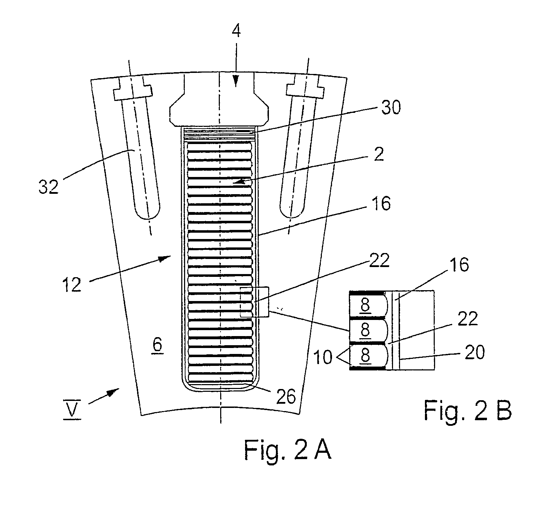

In Figs. 1A-B and Figs. 2A-B, see in particular Fig. 2a, a conventional consolidated coil 2 is shown. It is intended to be mounted in a winding slot 4 of a rotor 6 of an electric rotating machine. Only one winding slot is shown in the figures but the rotor generally has a plurality of such winding slots. When all the winding slots of the rotor have been provided with corresponding consolidated coils and the electrical conductors of the consolidated coils have been appropriately connected to each other, they form the electrical windings of the rotor. The consolidated coil 2 is produced from a straight part that comprises a stack of conductors 8 having a rectangular cross-section, the conductors thus being strip-shaped, with turn insulation 10 located in-between the conductor strips at at least the longitudinally central portion of the straight part. The straight part is consolidated to form a C-shaped compact coil 12 having bent end portions 14, in the outermost regions of which the electrically conducting strips are detached from each other and from the electrical insulation so that they can be brazed to corresponding conducting strips of another consolidated coil located in another winding slot, not shown.

In order to form the coil package a sheet 16 of electrically insulating material is further arranged on at least those sides 18 of the consolidated coil 2, which, when the consolidated coil is mounted in the winding slot 4, will be arranged at substantially radial walls 20 of the slot 4. Preferably, the sheet is arranged as two separate, substantially stiff parts 17, 17' as is seen in Figs. 1A and 1B. The separate parts can have an L-shaped cross-section, including large surfaces to be located substantially radially and narrow surfaces to be located in a circumferential direction, at the inner edge of consolidated coil and at the bottom of the winding slot.

Before the coil package is inserted in the winding slot the dimensions of the winding slot 4 and of the assembled coil package 12 including the separate parts 17, 17' are measured, in particular the widths in a circumferential direction. From the measured dimensions, such as by forming suitable differences, a resulting clearance is calculated and in particular the corresponding volume. Based on this calculation, a suitable amount of a heat curing filling compound 22, preferably a silicon polymer, is applied to the coil package in between the sheet 16 of electrically insulating material and the consolidated coil 2. Suitably, the filling compound 22 can be applied to the inward side 24 of the sheet 16 of electrically insulating material, facing the consolidated coil 2, but of course it can also be applied only or also to the sides of the consolidated coil.

The coil package formed in this way is then introduced in the winding slot 4, see Figs. 1B and Fig. 2A. Advantageously, any excess amount of the filling compound 22 at the opening of the slot, at the top surface of the coil package, is then removed. The coil package is then heated to a suitable curing temperature for curing the filling compound 22. The calculated amount of filling compound and the curing temperature are here selected so that an optimal fitting between the consolidated coil 2 and the winding slot in a circumferential direction is obtained, the optimal fitting existing at least at the operating temperature conditions of the electrical machine, i.e. when the electrical machine is running, such a rotating for producing electrical power. The fitting should thus be optimal in a circumferential direction, this meaning that the optimal fitting is between substantially radial side surfaces of the consolidated coil 2 included in the inserted coil package 12 and the corresponding opposite, substantially radial walls 20 of the slot 4.

Preferably, the calculated amount and the curing temperature are selected to give such a fitting at the operating temperature conditions of the electrical machine that the sheet 16 of electrically insulating material and the cured filling compound 22 at the operating temperature conditions fills the space between said sides 18 of the consolidated coil 2 and the walls 20 of the winding slot 4 in substantially uncompressed conditions, at least as taken in a circumferential direction. Hence, no substantial force on the filling compound 22, in particular no substantial perpendicular force or force having a circumferential direction, is then provided. In that respect, the calculated amount and the curing temperature can be selected so that the sheet 16 of electrically insulating material and the cured filling compound 22 at the operating temperature conditions substantially completely fills the space between the side surfaces 18 of the consolidated coil 2 and the walls 20 of the winding slot 4 to assure conduction of heat from the electrical windings of the consolidated coil 2 to the walls 20 of the slot 4 and into the body of the rotor.

Furthermore, a layer 26 forming an electrical bottom insulation can be applied to a bottom surface of the consolidated coil 2, the bottom insulation facing a bottom side 28 of the slot 4 and being located at the narrow surfaces of the separate parts 17, 17' of the insulating sheet material. Moreover, an electrical top insulation 30 can be applied to the top surface of the consolidated coil 2, the top surface located at the opening of the corresponding winding slot. The top insulation 30 can be applied to the consolidated coil, before or preferably after the coil package 12 has been inserted in the slot 4.

As described above, coil packages 12 are mounted in all the winding slots 4 of the rotor 6 and thereupon the windings of the coil packages are electrically interconnected to form the complete electrical winding of the rotor. The heating of the inserted coil packages 12 for curing the filling compound 22 is then preferably made jointly for all coil packages 12 in one operating step.

As also seen from Fig. 2A, the body of the rotor 6 may comprise radial ventilation ducts 32, for circulation of cooling air for the purpose of transferring away heat evolved in the rotor during operation. The ducts extend in the axial direction of the rotor, parallel to and on each side of the winding slots 4.

In operation, the method according to the present invention is thus carried out by the following sequential steps, see Figs. 1A, 1B and 2A:
I: Dimensions of said winding slot 4 and the coil package 12 are measured and a resulting clearance and clearance volume are calculated.
II: The heat curing filling compound 22 is applied in an adapted amount, based on said calculation, to the coil package 12 in between the sheet 16 of electrically insulating material and the consolidated coil 2.
III: The sheet 16 of electrically insulating material is mounted to at least those sides 18 of the consolidated coil 2, which, when the consolidated coil is mounted in the winding slot 4, will be located at the substantially radial walls 20 of the slot. Thus, the consolidated coil including the sheet of electrically insulating material now forms the coil package 12.
IV: The coil package 12 is inserted in the winding slot 4.
V: The filling compound 22 is cured by heating the inserted coil package 12 in the slot 4 to the curing temperature.

### List of reference numbers shown in drawings

- 2: consolidated coil
- 4: winding slot
- 6: rotor
- 8: conductor
- 10: turn insulation
- 12: coil package
- 14: half-coil shaped element
- 16: sheet of insulating material
- 17, 17': separate stiff parts of insulating sheet
- 18: side of the consolidated coil
- 20: radial wall of the slot
- 22: heat curing filling compound
- 24: inward side of insulating sheet
- 26: layer of bottom insulation
- 28: bottom side of the slot
- 30: top insulation
- 32: radial ventilation duct
I-V sequential steps carried out according to the method of the present invention

## Claims

1. A method of mounting electrical windings including consolidated coils (2) in winding slots (4) of a rotor (6) of an electric rotating machine, comprising for each of the consolidated coils the sequential steps of:
a) arranging a sheet (16) of electrically insulating material on at least those sides (18) of the consolidated coil (2), which, when the consolidated coil is mounted in a winding slot (4), will be arranged at substantially radial walls (20) of the slot, to form a coil package (12),
b) measuring dimensions of said winding slot (4) and the coil package (12) and calculating a resulting clearance,
c) applying a heat curing filling compound (22) in a calculated amount, based on said calculation, to the coil package (12) in between the sheet (16) of electrically insulating material and the consolidated coil (2),
d) inserting the coil package (12) in the winding slot (4), and
e) curing the filling compound (22) by heating the inserted coil package (12) in the slot (4) to a curing temperature,
the calculated amount and the curing temperature being selected so that an optimal fitting between consolidated coil (2) included in the inserted coil package (12) and the substantially radial walls (20) of the slot (4) at operating temperature conditions of the electrical machine is obtained.

2. A method according to claim 1, wherein the calculated amount and the curing temperature are selected to give such a fitting at the operating temperature conditions of the electrical machine that the sheet (16) of electrically insulating material and the cured filling compound (22) at the operating temperature conditions fills the space between said sides (18) of the consolidated coil (2) and the walls (20) of the winding slot (4) in substantially uncompressed conditions, not providing any substantial force on the filling compound (22), in particular no substantial perpendicular or circumferential force.

3. A method according to claim 2, wherein the calculated amount and the curing temperature are selected so that the sheet (16) of electrically insulating material and the cured filling compound (22) at the operating temperature conditions substantially completely fills the space between said sides (18) of the consolidated coil (2) and the walls (20) of the winding slot (4) to assure conduction of heat from windings of the consolidated coil to the walls (20) of the slot.

4. A method according to claim 1, wherein in step c) the filling compound (22) is applied to the inward side (24) of the sheet (16) of electrically insulating material, facing the consolidated coil (2).

5. A method according to claim 1, wherein the method comprises the further step of applying a layer (26) of bottom insulation to a bottom surface of the consolidated coil (2), facing a bottom side (28) of the slot (4), before step a).

6. A method according to claim 1, wherein the method comprises the further step of applying a top insulation (30) to the consolidated coil (2).

7. A method according to claim 6, wherein the top insulation (30) is applied before step d).

8. A method according to claim 6, wherein the top insulation (30) is applied after step d).

9. A method according to claim 1, wherein the method comprises the further steps of inserting a plurality of coil packages (12) in respective winding slots (4) of the rotor (6) and electrically interconnecting windings of the coil packages (12) to form a complete winding of the rotor (6), the heating of the inserted coil packages (12) for curing the filling compound (22) made jointly for all coil packages (12) in one operating step.

10. A method according to claim 1, wherein the method comprises the further step of removing an excess amount of filling compound (22) after the coil package (12) has been inserted in the winding slot (4) in step d).

11. A method according to claim 1, wherein in the step of arranging the sheet (16) of electrically insulating material, the sheet is arranged as two separate substantially stiff parts (17, 17').

12. A method according to claim 1, wherein in the step of applying a heat curing filling compound (22), the filling compound is a silicon polymer.

13. A rotor (6) of an electric rotating machine including electrical windings mounted in winding slots (4), the electrical winding formed by consolidated coils (2), wherein for each of the winding slots:
- a corresponding consolidated coil is mounted in the winding slot,
- a sheet (16) of electrically insulating material is arranged on at least those sides (18) of the consolidated coil (2), which are located at substantially radial walls (20) of the slot,
- a heat cured filling compound (22) is located between the sheet (16) of electrically insulating material and the consolidated coil (2),
- the amount of the heat cured filling compound being such that an optimal fitting between the consolidated coil (2) and the substantially radial walls (20) of the slot (4) at operating temperature conditions of the electrical machine is obtained.

## Patentansprüche

1. Verfahren zum Montieren von elektrischen Wicklungen einschließlich konsolidierten Spulen (2) in Wicklungschlitzen (4) eines Rotors (6) einer elektrischen, sich drehenden Maschine, umfassend die folgenden sequenziellen Schritte für jede der konsolidierten Spulen:
a) Anordnung einer Platte (16) aus elektrisch isolierendem Material auf mindestens jenen Seiten (18) der konsolidierten Spule (2), die, wenn die konsolidierte Spule in einem Wicklungschlitz (4) montiert ist, an im Wesentlichen radialen Wänden (20) des Schlitzes angeordnet sein werden, um ein Spulenpaket (12) auszubilden,
b) Messen von Abmessungen des Wicklungschlitzes (4) und des Spulenpakets (12) und Berechnen eines resultierenden Zwischenraums,
c) Aufbringen einer wärmehärtenden Füllmasse (22) in einer berechneten Menge auf der Basis der Berechnung auf das Spulenpaket (12) zwischen der Platte (16) aus elektrisch isolierendem Material und der konsolidierten Spule (2),
d) Einsetzen des Spulenpakets (12) in dem Wicklungsschlitz (4) und
e) Härten der Füllmasse (22) durch Erhitzen des eingesetzten Spulenpakets (12) in dem Schlitz (4) auf eine Härtetemperatur,
wobei die berechnete Menge und die Härtetemperatur so ausgewählt sind, dass eine optimale Passung zwischen der in das eingesetzte Spulenpaket (12) enthaltenen konsolidierten Spule (2) und den im Wesentlichen radialen Wänden (20) des Schlitzes (4) bei Arbeitstemperaturbedingungen der elektrischen Maschine erhalten wird.

2. Verfahren nach Anspruch 1, wobei die berechnete Menge und die Härtetemperatur so ausgewählt werden, dass sich eine derartige Passung bei den Arbeitstemperaturbedingungen der elektrischen Maschine ergibt, dass die Platte (16) aus elektrisch isolierendem Material und die gehärtete Füllmasse (22) bei den Arbeitstemperaturbedingungen den Raum zwischen den Seiten (18) der konsolidierten Spule (2) und den Wänden (20) des Wicklungschlitzes (4) in im Wesentlichen unkomprimierten Zuständen füllen, wobei keine wesentliche Kraft auf die Füllmasse (22) ausgeübt wird, insbesondere keine wesentliche senkrechte oder Umfangskraft.

3. Verfahren nach Anspruch 2, wobei die berechnete Menge und die Härtetemperatur so ausgewählt werden, dass die Platte (16) aus elektrisch isolierendem Material und die gehärtete Füllmasse (22) bei den Arbeitstemperaturbedingungen den Raum zwischen den Seiten (18) der konsolidierten Spule (2) und den Wänden (20) des Wicklungschlitzes (4) im Wesentlichen füllt, um eine Wärmeleitung von Wicklungen der konsolidierten Spule (2) und den Wänden (20) des Schlitzes sicherzustellen.

4. Verfahren nach Anspruch 1, wobei im Schritt c) die Füllmasse (22) auf der Innenseite (24) der Platte (16) aus elektrisch isolierendem Material aufgebracht wird, der konsolidierten Spule (2) zugewandt.

5. Verfahren nach Anspruch 1, wobei das Verfahren weiterhin den weiteren Schritt des Aufbringens einer Schicht (26) aus unterer Isolation auf einer unteren Oberfläche der konsolidierten Spule (2), einer unteren Seite (28) des Schlitzes (4) zugewandt, vor Schritt a) umfasst.

6. Verfahren nach Anspruch 1, wobei das Verfahren weiterhin den weiteren Schritt des Aufbringens einer oberen Isolation (30) auf der konsolidierten Spule (2) umfasst.

7. Verfahren nach Anspruch 6, wobei die obere Isolation (30) vor Schritt d) aufgebracht wird.

8. Verfahren nach Anspruch 6, wobei die obere Isolation (30) nach Schritt d) aufgebracht wird.

9. Verfahren nach Anspruch 1, wobei das Verfahren die weiteren Schritte des Einsetzens von mehreren Spulenpaketen (12) in jeweilige Wicklungsschlitze (4) des Rotors (6) und des elektrischen Zusammenschaltens von Wicklungen der Spulenpakete (12) zum Ausbilden einer vollständigen Wicklung des Rotors (6), wobei das Erhitzen der eingesetzten Spulenpakete (12) zum Härten der Füllmasse (22) für alle Spulenpakete (12) gemeinsam in einem Arbeitsschritt erfolgt.

10. Verfahren nach Anspruch 1, wobei das Verfahren die weiteren Schritte des Entfernens einer überschüssigen Menge von Füllmasse (22) umfasst, nachdem das Spulenpaket (12) in Schritt d) in den Wicklungsschlitz (4) eingesetzt worden ist.

11. Verfahren nach Anspruch 1, wobei bei dem Schritt des Anordnens der Platte (16) aus elektrisch isolierendem Material die Platte als zwei separate, im Wesentlichen steife Teile (17, 17') angeordnet wird.

12. Verfahren nach Anspruch 1, wobei bei dem Schritt des Aufbringens einer wärmehärtenden Füllmasse (22) die Füllmasse ein Siliziumpolymer ist.

13. Rotor (6) einer elektrischen, sich drehenden Maschine mit in Wicklungsschlitzen (4) montierten elektrischen Wicklungen, wobei die elektrische Wicklung durch konsolidierte Spulen (2) ausgebildet wird, wobei für jeden der Wicklungsschlitze:
- eine entsprechende konsolidierte Spule in den Wicklungsschlitz montiert ist,
- eine Platte (16) aus elektrisch isolierendem Material auf mindestens jenen Seiten (18) der konsolidierte Spulen (2) angeordnet ist, die an im Wesentlichen radialen Wänden (20) des Schlitzes angeordnet sind,
- eine wärmegehärtete Füllmasse (22) zwischen der Platte (16) aus elektrisch isolierendem Material und der konsolidierten Spule (2) angeordnet ist,
- die Menge der wärmegehärtete Füllmasse derart ist, dass eine optimale Passung zwischen der konsolidierten Spule (2) und den im Wesentlichen radialen Wänden (20) des Schlitzes (4) bei Arbeitstemperaturbedingungen der elektrischen Maschine erhalten wird.

## Revendications

1. Procédé de montage d'enroulements électriques comprenant des bobines consolidées (2) dans des encoches d'enroulement (4) d'un rotor (6) d'une machine rotative électrique, comprenant pour chacune des bobines consolidées les étapes séquentielles suivantes:
a) agencer une feuille (16) d'un matériau électriquement isolant sur au moins les côtés (18) de la bobine consolidée (2) qui, lorsque la bobine consolidée est montée dans une encoche d'enroulement (4), seront disposés à des parois sensiblement radiales (20) de l'encoche, de manière à former un bloc de bobine (12),
b) mesurer les dimensions de ladite encoche d'enroulement (4) et du bloc de bobine (12) et calculer un jeu obtenu,
c) appliquer un composé de remplissage durcissable à la chaleur (22) en une quantité calculée, sur la base dudit calcul, au bloc de bobine (12) entre la feuille (16) de matériau électriquement isolant et la bobine consolidée (2),
d) insérer le bloc de bobine (12) dans l'encoche d'enroulement (4), et
e) faire durcir le composé de remplissage (22) en chauffant le bloc de bobine inséré (12) dans l'encoche (4) à une température de durcissement, la quantité calculée et la température de durcissement étant sélectionnées de telle sorte qu'un agencement optimal entre la bobine consolidée (2) comprise dans le bloc de bobine inséré (12) et les parois sensiblement radiales (20) de l'encoche dans des conditions de température de fonctionnement de la machine électrique soit réalisé.

2. Procédé selon la revendication 1, dans lequel la quantité calculée et la température de durcissement sont sélectionnées pour réaliser un agencement dans les conditions de température de fonctionnement de la machine électrique tel que la feuille (16) de matériau électriquement isolant et le composé de remplissage durci (22) dans les conditions de température de fonctionnement remplissent l'espace entre lesdits côtés (18) de la bobine consolidée (2) et les parois (20) de l'encoche d'enroulement (4) dans des conditions sensiblement non comprimées, en n'exerçant aucune force substantielle sur le composé de remplissage (22), en particulier en n'exerçant aucun force substantielle perpendiculaire ou circonférentielle.

3. Procédé selon la revendication 2, dans lequel la quantité calculée et la température de durcissement sont sélectionnées de telle sorte que la feuille (16) de matériau électriquement isolant et le composé de remplissage durci (22) dans les conditions de température de fonctionnement remplissent sensiblement complètement l'espace entre lesdits côtés (18) de la bobine consolidée (2) et les parois (20) de l'encoche d'enroulement (4) de manière à assurer la conduction de chaleur des enroulements de la bobine consolidée aux parois (20) de l'encoche.

4. Procédé selon la revendication 1, dans lequel, à l'étape c), le composé de remplissage (22) est appliqué sur le côté intérieur (24) de la feuille (16) de matériau électriquement isolant, qui fait face à la bobine consolidée (2).

5. Procédé selon la revendication 1, dans lequel le procédé comprend l'étape supplémentaire qui consiste à appliquer une couche (26) d'isolation inférieure sur une surface inférieure de la bobine consolidée (2), qui fait face à un côté inférieur (28) de l'encoche (4), avant l'étape a).

6. Procédé selon la revendication 1, dans lequel le procédé comprend l'étape supplémentaire qui consiste à appliquer une isolation supérieure (30) sur la bobine consolidée (2).

7. Procédé selon la revendication 6, dans lequel l'isolation supérieure (30) est appliquée avant l'étape d) .

8. Procédé selon la revendication 6, dans lequel l'isolation supérieure (30) est appliquée après l'étape d) .

9. Procédé selon la revendication 1, dans lequel le procédé comprend les étapes supplémentaires qui consistent à insérer une pluralité de blocs de bobine (12) dans des encoches d'enroulement respectives (4) du rotor (6) et à interconnecter électriquement des enroulements des blocs de bobine (12) de manière à former un enroulement complet du rotor (6), le chauffage des blocs de bobine insérés (12) pour durcir le composé de remplissage (22) étant effectué conjointement pour tous les blocs de bobine (12) en une seule étape opérationnelle.

10. Procédé selon la revendication 1, dans lequel le procédé comprend l'étape supplémentaire qui consiste à enlever une quantité excédentaire de composé de remplissage (22) après que le bloc de bobine (12) ait été inséré dans l'encoche d'enroulement (4) à l'étape d) .

11. Procédé selon la revendication 1, dans lequel, à l'étape d'agencement de la feuille (16) de matériau électriquement isolant, la feuille est agencée sous la forme de deux parties séparées sensiblement rigides (17, 17').

12. Procédé selon la revendication 1, dans lequel, à l'étape d'application d'un composé de remplissage durcissable à la chaleur (22), le composé de remplissage est un polymère de silicium.

13. Rotor (6) d'une machine rotative électrique comprenant des enroulements électriques montés dans des encoches d'enroulement (4), l'enroulement électrique étant formé par des bobines consolidées (2), dans lequel, pour chacune des encoches d'enroulement:
- une bobine consolidée correspondante est montée dans l'encoche d'enroulement,
- une feuille (16) d'un matériau électriquement isolant est agencée sur au moins les côtés (18) de la bobine consolidée (2) qui sont situés à des parois sensiblement radiales (20) de l'encoche,
- un composé de remplissage durci à la chaleur (22) est situé entre la feuille (16) de matériau électriquement isolant et la bobine consolidée (2), et
- la quantité du composé de remplissage durci à la chaleur est telle qu'un agencement optimal entre la bobine consolidée (2) et les parois sensiblement radiales (20) de l'encoche (4) dans des conditions de température de fonctionnement de la machine électrique est réalisé.
